# DEMANDE DE BREVET EUROPEEN

(11) **EP 1 677 118 A1**
(43) Date de publication de la demande: **05.07.2006**
(21) Numéro de dépôt: 05113009.4
(22) Date de dépôt: 27.12.2005
(51) Int. Cl.: G01P 15/125, G01P 15/08, G01P 15/18, B81B 3/00, B81B 5/00, B81B 7/04, G01C 19/56

(54) **Accéléromètre micro-usine à peignes capacitifs**

(30) Priorité: 29.12.2004 FR 0414031
(71) Demandeur: COMMISSARIAT A L'ENERGIE ATOMIQUE, 75752 Paris Cedex 15 (FR)
(72) Inventeur: ROBERT, Philippe, 38100, GRENOBLE (FR)
(74) Mandataire: Poulin, Gérard

(57) **Abrégé**

Accéléromètre à peignes capacitifs comportant un substrat (5), une première électrode mobile (2) par rapport audit substrat (5) munie d'un ensemble de doigts mobiles (7), une première électrode fixe (4A, 4B) par rapport audit substrat (5) munie d'un ensemble de doigts fixes (8A, 8B), chacun desdits doigts mobiles (7) étant.0* disposé entre deux doigts fixes (8A, 8B) contigus de manière à former une première microstructure à peignes interdigités (20), accéléromètre dans lequel moins une deuxième électrode mobile (40) associée à au moins une deuxième électrode fixe (42) pour former au moins une deuxième microstructure à peignes interdigités (22) superposée à la première microstructure à peignes interdigités (20).

Selon l'invention, lesdites deuxième électrode mobile (40) et deuxième électrode fixe (42) sont gravées dans le même substrat (5) que lesdites première électrode mobile (2) et première électrode fixe (4).

## Description

### DOMAINE TECHNIQUE

L'invention se situe dans le domaine des micro-capteurs en silicium et concerne plus spécifiquement un accéléromètre micro-usiné à peignes capacitifs comportant un substrat, une électrode mobile par rapport audit substrat munie d'un ensemble de doigts sensibles mobiles, une électrode fixe par rapport audit substrat munie d'un ensemble de doigts fixes, chacun des doigts mobiles étant disposé entre deux doigts fixes contigus de manière à former un ensemble de condensateurs à capacité variable.

### ÉTAT DE LA TECHNIQUE ANTÉRIEURE

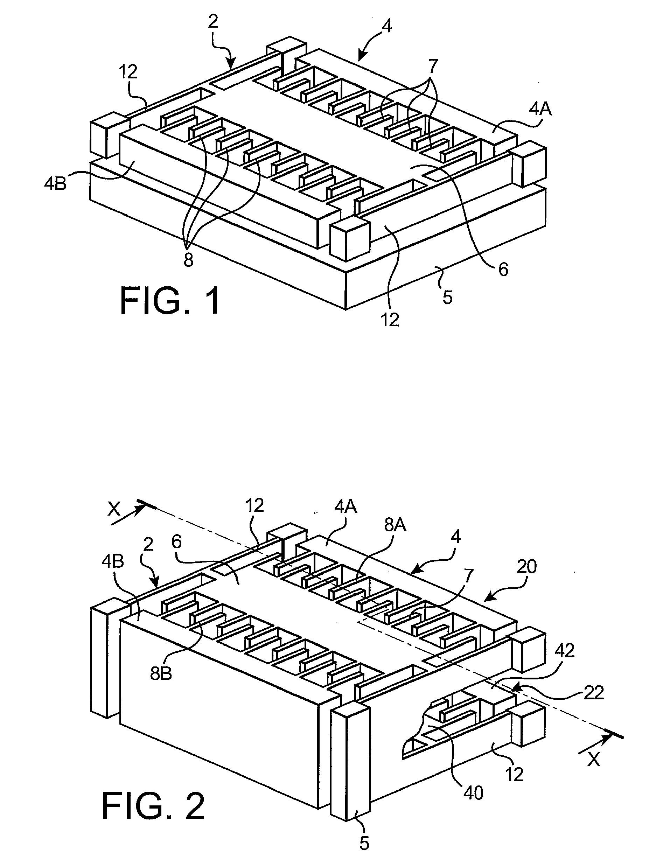

La figure 1 illustre schématiquement une vue de dessus d'un accéléromètre à peignes interdigités de l'art antérieur comportant une première électrode 2 et une deuxième électrode 4 gravées dans un même substrat en silicium 5. La première électrode 2 est constituée par une masse mobile 6 munie d'une pluralité de doigts mobiles 7 s'étendant latéralement. La deuxième électrode est composée de deux parties 4A, 4B situées de part et d'autre de la masse mobile 6 et comportant chacune plusieurs doigts fixes 8 s'étendant parallèlement aux doigts mobiles 7. Chacun des doigts mobiles 7 est disposé entre deux doigts fixes contigus de manière à définir une microstructure à peignes interdigités. La masse mobile 6 est reliée au substrat 5 par une tige flexible 12 définissant un ressort de rappel.

En fonctionnement, sous l'effet d'une accélération suivant l'axe de la masse mobile 6, celle-ci se déplace dans le plan par rapport au substrat 5 entraînant un déplacement relatif des doigts mobiles 7 par rapport aux doigts fixes 8. Ce déplacement relatif produit une variation de la capacité entre les doigts mobiles 7 et les doigts fixes 8. La mesure d'accélération s'effectue par la mesure de cette variation de capacité.

Généralement, ces micro-accéléromètres sont réalisés soit sur une couche de silicium polycristallin déposée sur une couche sacrificielle d'oxyde, soit sur substrat de type SOI (Silicon On Insulator pour Silicium sur Isolant) comportant une couche d'oxyde enterrée servant alors de couche sacrificielle. Un exemple d'une telle microstructure est décrit dans le brevet français de la demanderesse N° FR2558263.

Un problème de ce type de dispositif provient du fait que, pour augmenter leur sensibilité, il est nécessaire d'augmenter la valeur de la masse sismique. Dans une technologie planaire, ceci se traduit par l'augmentation de la surface de la puce, et donc, par une augmentation du coût du capteur.

Une autre solution consiste à utiliser une épaisseur de silicium plus importante. Dans ce cas on perd en finesse de gravure, notamment au niveau des peignes capacitifs et des ressorts de rappel. Ceci a pour conséquence une réduction des performances du capteur et un contrôle moins efficace de la reproductibilité durant la phase de fabrication.

Par ailleurs, pour réaliser un capteur inertiel bi-axial (suivant X et suivant Y), on réalise communément deux capteurs placés l'un à coté de l'autre, ce qui consomme une place très importante.

Le but de l'invention est de pallier les inconvénients de l'art antérieur décrits ci-dessus.

### EXPOSÉ DE L'INVENTION

L'invention préconise un accéléromètre à peignes capacitifs comportant un substrat, une première électrode mobile par rapport audit substrat munie d'un ensemble de doigts mobiles, une première électrode fixe par rapport audit substrat munie d'un ensemble de doigts fixes, chacun desdits doigts mobiles étant disposé entre deux doigts fixes contigus de manière à former une première microstructure à peignes interdigités, cet accéléromètre comportant en outre au moins une deuxième électrode mobile associée à au moins une deuxième électrode fixe pour former au moins une deuxième microstructure à peignes interdigités superposée à la première microstructure à peignes interdigités, lesdites deuxième électrode mobile et deuxième électrode fixe sont gravées dans le même substrat que lesdites première électrode mobile et première électrode fixe.

Préférentiellement, les première et deuxième électrodes mobiles sont constituées chacune par une masse mobile centrale à partir de laquelle s'étend latéralement une pluralité de doigts mobiles, et les première et deuxième électrodes fixes sont constituées chacune de deux parties disposées symétriquement de part et d'autre desdites masses mobiles centrales et comportant chacune une pluralité de doigts fixes s'étendant latéralement vers lesdites masses centrales de sorte que chaque doigt mobile soit disposé entre deux doigts fixes contigus.

Avantageusement, les doigts mobiles (respectivement fixes) des première et deuxième électrodes mobiles (respectivement fixes) sont solidaires.

Avantageusement, les doigts mobiles (respectivement fixes) des première et deuxième électrodes mobiles (respectivement fixes) sont dissociés. Dans ce cas, les éléments constitutifs de la première microstructure à peignes interdigités peuvent avantageusement être tournées d'un angle de 90° par rapport aux éléments constitutifs de la deuxième microstructure à peignes interdigités.

Selon une première variante, les doigts mobiles (respectivement fixes) des première et deuxième électrodes mobiles (respectivement fixes) sont alignés verticalement.

Selon une deuxième variante, les doigts mobiles (respectivement fixes) des première et deuxième électrodes mobiles (respectivement fixes) sont décalés verticalement les uns par rapport aux autres.

Selon une variante, les masses mobiles respectives desdites première et deuxième électrodes mobiles sont solidaires.

Selon une autre variante, les masses mobiles respectives desdites première et deuxième électrodes mobiles sont dissociées.

En résumé, on peut avoir plusieurs variantes différentes. Par exemple, dans une première variante de réalisation, les masses mobiles respectives des première et deuxième électrodes mobiles peuvent être solidaires, et les doigts mobiles (respectivement fixes) desdites première et deuxième électrodes mobiles (respectivement fixes) peuvent être également solidaires.

Dans une deuxième variante de réalisation, les masses mobiles respectives des première et deuxième électrodes mobiles peuvent être solidaires et les doigts mobiles (respectivement fixes) desdites première et deuxième électrodes mobiles (respectivement fixes) peuvent être dissociés.

Dans cette deuxième variante, les doigts mobiles (respectivement fixes) desdites première et deuxième électrodes mobiles (respectivement fixes) peuvent être soit alignés verticalement, soit décalés verticalement les uns par rapport aux autres.

Dans une troisième variante de réalisation, les masses mobiles respectives desdites première et deuxième électrodes mobiles peuvent être dissociées, et les doigts mobiles (respectivement fixes) des première et deuxième électrodes mobiles (respectivement fixes) peuvent être dissociés et orientés à 90° les uns par rapport aux autres pour obtenir deux accéléromètres indépendants, l'un sensible suivant l'axe X, l'autre sensible suivant l'axe Y, les deux accéléromètres étant réalisés sur le même substrat et l'un au dessus de l'autre.

Préférentiellement, les première et deuxième électrodes mobiles sont reliées à leurs extrémités respectives au substrat par des tiges flexibles, appelées bras de rappel.

Selon une première variante, les tiges flexibles de la première électrode mobile sont solidaires des tiges flexibles de la deuxième électrode mobile.

Selon une deuxième variante, les tiges flexibles de la première électrode mobile sont dissociés des tiges flexibles de la deuxième électrode mobile.

Avantageusement, les tiges flexibles sont gravées directement dans le substrat.

L'accéléromètre selon l'invention est réalisé dans un substrat comprenant une couche sacrificielle enterrée, par un procédé comportant les étapes suivantes .
- formation d'un masque sur le premier substrat sur deux faces opposées dudit substrat, pour définir, de part et d'autre de ladite couche superficielle enterrée, respectivement une première microstructure à peignes interdigités superposée à une deuxième microstructure à peignes interdigités,
- gravure sur une face du premier substrat de la première microstructure à peignes interdigités comprenant des doigts fixes et mobiles, une masse et des bras de rappel, avec arrêt sur la couche sacrificielle enterrée,
- formation d'une cavité sur une face d'un deuxième substrat,
- scellement de la face du premier substrat comprenant la première microstructure à peignes interdigités sur la face du deuxième substrat en vis-à-vis de la cavité du deuxième substrat,
- gravure sur la face exposée du premier substrat de la deuxième microstructure à peignes interdigités comprenant des doigts fixes et mobiles, une masse et des bras de rappel, avec arrêt sur la couche sacrificielle enterrée,
- élimination d'au moins une partie de la couche sacrificielle enterrée.

Avantageusement, le deuxième substrat utilisé est en silicium.

Avantageusement, le scellement est réalisé par exemple par adhésion moléculaire, scellement eutectique, scellement polymère...

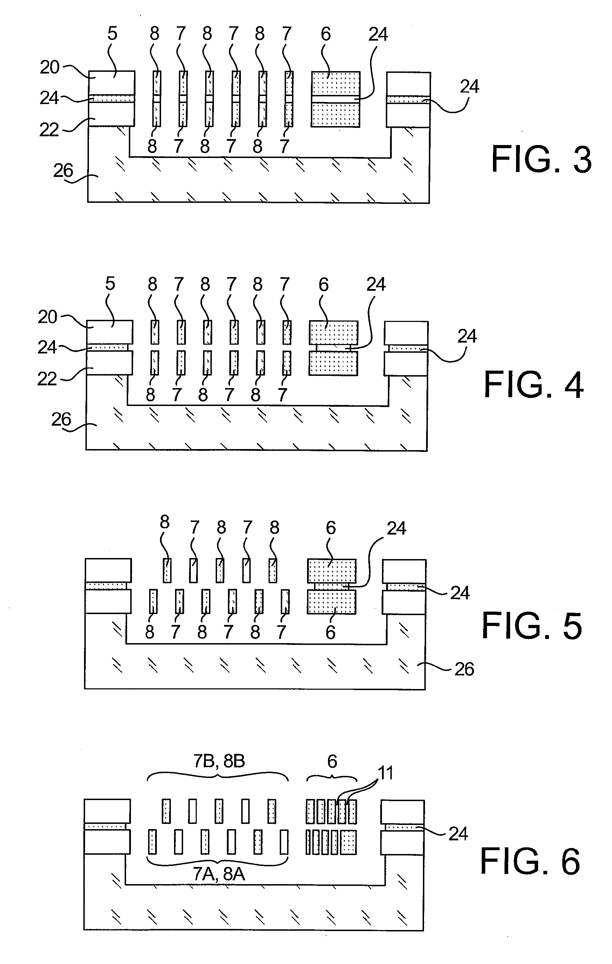

Selon une première variante, l'élimination de la couche sacrificielle enterrée se fait au niveau où la couche sacrificielle enterrée est mise à nue par les étapes de gravure. On désolidarise ainsi l'ensemble de doigts mobiles de l'ensemble de doigts fixes de chaque microstructure comme illustré dans la figure 3.

Avantageusement, l'élimination de la couche sacrificielle enterrée se fait par gravure sèche, par exemple par gravure plasma.

Selon une deuxième variante, l'élimination de la couche sacrificielle enterrée se fait également au niveau de la couche sacrificielle enterrée reliant les doigts de la première microstructure et ceux de la deuxième microstructure. On peut ainsi désolidariser l'ensemble des doigts mobiles de l'ensemble de doigts fixes et désolidariser les doigts de la première microstructure de ceux de la deuxième microstructure comme illustré dans les figures 4 ou 5 décrites ci-dessous.

Selon une troisième variante, l'élimination de la couche sacrificielle enterrée se fait également au niveau des masses. On peut avantageusement former des trous (par exemple par gravure) dans au moins une des masses pour donner accès à la couche sacrificielle et faciliter l'élimination de la couche sacrificielle située entre la masse sismique du dessus et celle du dessous comme illustré dans la figure 6.

Avantageusement, l'élimination de la couche sacrificielle enterrée se fait par gravure à l'acide fluorhydrique HF à l'état liquide ou vapeur.

Préférentiellement, le procédé de fabrication comprend en outre, entre l'étape de scellement et l'étape de gravure, une étape d'amincissement de la face exposée du substrat avec arrêt avant d'atteindre la couche d'oxyde enterrée.

Avantageusement, l'étape d'amincissement se fait par gravure KOH.

Préférentiellement, le substrat est un substrat de type SOI comportant une couche d'oxyde SiO₂ sacrificielle enterrée.

### BRÈVE DESCRIPTION DES DESSINS

D'autres caractéristiques et avantages de l'invention ressortiront de la description qui suit, prise à titre d'exemple non limitatif, en référence aux figures annexées dans lesquelles :
- la figure 1, décrite précédemment, illustre schématiquement une vue en perspective d'un accéléromètre de l'art antérieur,
- la figure 2 illustre schématiquement une vue en perspective partiellement en coupe d'un accéléromètre dans un mode préféré de réalisation de l'invention,
- la figure 3 illustre schématiquement une vue en coupe verticale selon l'axe XX d'un accéléromètre dans une première variante de réalisation de l'invention.
- la figure 4 illustre schématiquement une vue en coupe verticale selon l'axe XX d'un accéléromètre selon une deuxième variante de réalisation.
- la figure 5 illustre schématiquement une vue en coupe verticale selon l'axe XX d'un accéléromètre dans la deuxième variante de réalisation.
- la figure 6 illustre schématiquement une vue en coupe verticale selon l'axe XX d'un accéléromètre dans une troisième variante de réalisation.
- les figures 7 à 14 illustrent schématiquement les différentes phases du procédé de réalisation d'un accéléromètre selon l'invention.

### EXPOSÉ DÉTAILLÉ DE MODES DE RÉALISATION PARTICULIERS

Dans la suite de la description, les éléments communs aux dispositifs de l'art antérieur et aux dispositifs de l'invention seront désignés par des références identiques.

La figure 2 illustre schématiquement une vue en perspective d'un accéléromètre micro-usiné à peignes capacitifs constitué par une première microstructure à peignes interdigités 20 superposée à une deuxième microstructure à peignes interdigités 22. Les deux structures 20 et 22 sont réalisées dans un substrat 5 de type SOI (pour Silicon on insulator, Silicium sur Isolant).

La microstructure 20 comporte une électrode mobile 2 et une électrode fixe 4. La microstructure 22 comporte une électrode mobile 40 et une électrode fixe 42. L'électrode mobile 2 (respectivement 40) est constituée par une masse mobile 6 de forme rectangulaire, gravée dans le substrat 5 et munie d'un ensemble de doigts sensibles 7 également gravés dans le substrat 5.

L'électrode fixe 4 (respectivement 42) comporte une première partie 4A et une deuxième partie 4B agencées symétriquement de part et d'autre de la masse mobile 6.

La première partie 4A et la deuxième partie 4B comportent chacune plusieurs doigts fixes 8A, 8B s'étendant latéralement en direction de la masse mobile 6 et parallèlement aux doigts mobiles 7 de sorte que chaque doigt mobile 7 soit disposé entre deux doigts fixes contigus 8A, 8B.

La masse mobile 6 est reliée à l'électrode fixe (4A, 4B) au moyen de tiges flexibles 12 réalisées par gravure dans le substrat.

La figure 3 illustre une première variante de réalisation dans laquelle les masses mobiles 6 et les doigts mobiles 7 de la première et de la deuxième microstructures à peignes interdigités 20, 22 sont unies par une couche sacrificielle enterrée 24. De même, dans cette variante, les doigts fixes 8A, 8B desdites première et deuxième microstructures sont reliés par la couche sacrificielle 24.

La figure 4 illustre une deuxième variante de réalisation dans laquelle les masses mobiles des première et deuxième microstructures 20, 22 sont solidaires tandis que les doigts mobiles 7 et les doigts fixes 8 desdites microstructures sont dissociés.

Dans cette deuxième variante, les doigts mobiles 7 et les doigts fixes 8 peuvent être soit alignés verticalement comme cela est illustré schématiquement à la figure 4, soit décalés verticalement les uns par rapport aux autres comme cela est illustré schématiquement à la figure 5.

La figure 6 illustre une troisième variante de réalisation dans laquelle les microstructures 20, 22 comportent des masses mobiles dissociées, qui peuvent être de tailles différentes, un premier groupes de doigts mobiles 7A (respectivement fixes 8A) alignés verticalement, et un deuxième groupes de doigts mobiles 7B (respectivement fixes 8B) décalés verticalement les uns par rapport aux autres. Ici, les masses mobiles ont été dissociées en gravant des trous 11 dans l'épaisseur des masses afin de faciliter l'accès à la couche sacrificielle. Le premier groupe de doigts mobiles 7A (respectivement fixes 8A) peuvent également être tournés de 90° par rapport au deuxième groupes de doigts mobiles 7B (respectivement fixes 8B) ; on obtient ainsi deux accéléromètres suivant deux axes sensibles différents, par exemple selon un axe sensible X et un axe sensible Y, les axes X et Y étant orthogonaux.

Dans la variante où les deux structures sont indépendantes, on a le choix entre .
- avoir deux accéléromètres sensibles suivant le même axe, mais ayant des sensibilités différentes (par exemple un de 10 g et un de 50 g) en jouant soit sur la taille de la masse, soit sur la raideur des bras de rappel,
- avoir deux accéléromètres sensibles suivant deux axes orthogonaux avec une même sensibilité (par exemple 50 g pour les deux).

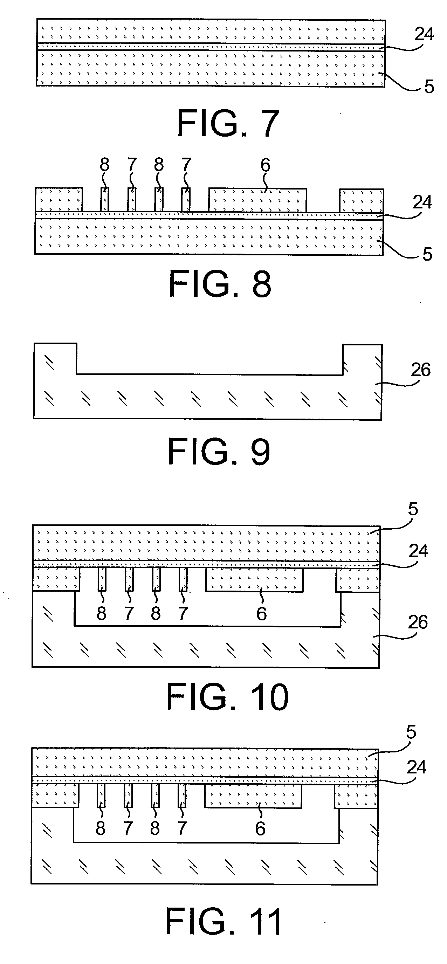

Le procédé de fabrication de l'accéléromètre selon l'invention va maintenant être décrit en référence aux figures 7 à 14.

L'étape illustrée par la figure 7 consiste à réaliser un masque sur un substrat 5 de type SOI comportant une couche d'oxyde SiO₂ sacrificielle enterrée 24 pour définir, de part et d'autre de ladite couche superficielle 24, respectivement une première microstructure à peignes interdigités superposée à une deuxième microstructure à peignes interdigités.

L'étape illustrée par la figure 8 consiste à graver sur, par exemple, 60 µm dans le substrat SOI 5 les doigts 7, 8, la masse 6 et les bras de rappel 12 de la première microstructure 20, avec arrêt sur la couche d'oxyde enterrée 24.

L'étape illustrée par la figure 9 consiste à graver une cavité de 30pm sur un deuxième substrat 26 en Silicium.

L'étape illustrée par la figure 10 consiste à sceller le premier substrat 5 sur le deuxième substrat 26, par exemple par adhésion moléculaire, scellement eutectique, scellement polymère...

L'étape illustrée par la figure 11 consiste à amincir le substrat SOI 5 par gravure KOH avec arrêt à environ 60 µm de la couche d'oxyde enterrée 24.

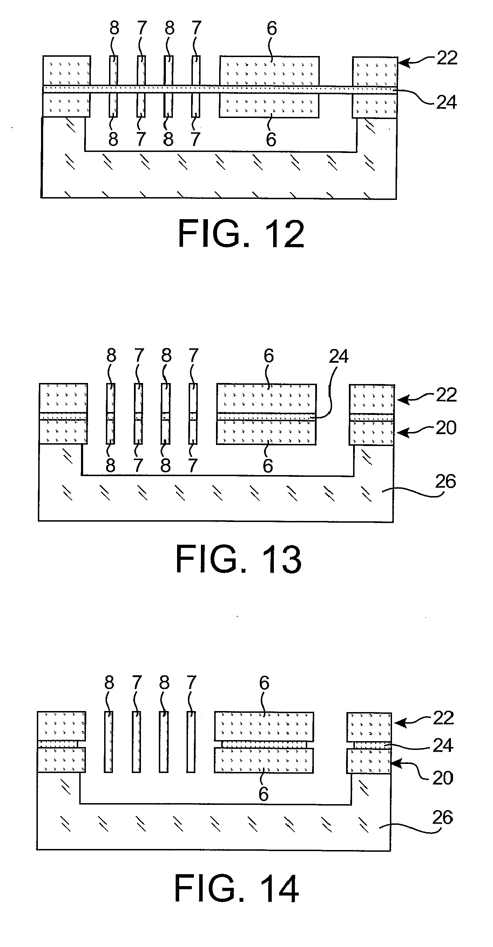

L'étape illustrée par la figure 12 consiste à graver sur 60 µm dans le substrat SOI 5 les doigts 7, 8, la masse 6 et les bras de rappel 12 de la deuxième microstructure 22, avec arrêt sur la couche d'oxyde enterrée 24.

L'étape illustrée par la figure 13 consiste à graver, avantageusement par gravure sèche, la couche sacrificielle 24 sur toute son épaisseur (typiquement de 0,4 à 1 µm selon le substrat SOI de départ) pour libérer les microstructures 20, 22 correspondant au dispositif de la figure 3.

Selon une autre variante, le retrait de la couche sacrificielle peut se faire comme illustré en figure 14. L'étape illustrée par la figure 14 consiste à retirer la couche sacrificielle 24 par gravure humide ou à l'acide fluorhydrique HF vapeur pour désolidariser l'ensemble de doigts mobiles 7 de l'ensemble de doigts fixes 8 et pour désolidariser les doigts de la microstructure 20 de ceux de la microstructure 22 correspondant aux dispositifs des figures 4, 5 et 6.

Ce procédé permet de réduire les dimensions de l'accéléromètre par superposition de deux structures à peignes interdigités sur le même substrat. Cette technique peut être mise à profit pour réaliser un accéléromètre bi-axial de dimension réduite.

Notons qu'il est possible de superposer plus de deux microstructures sans sortir du cadre de l'invention.

## Revendications

1. Accéléromètre à peignes capacitifs comportant un substrat (5), une première électrode mobile (2) par rapport audit substrat (5) munie d'un ensemble de doigts mobiles (7), une première électrode fixe (4A, 4B) par rapport audit substrat (5) munie d'un ensemble de doigts fixes (8A, 8B), chacun desdits doigts mobiles (7) étant disposé entre deux doigts fixes (8A, 8B) contigus de manière à former une première microstructure à peignes interdigités (20), accéléromètre dans lequel moins une deuxième électrode mobile (40) associée à au moins une deuxième électrode fixe (42) pour former au moins une deuxième microstructure à peignes interdigités (22) superposée à la première microstructure à peignes interdigités (20), **caractérisé en ce que** lesdites deuxième électrode mobile (40) et deuxième électrode fixe (42) sont gravées dans le même substrat (5) que lesdites première électrode mobile (2) et première électrode fixe (4).

2. Accéléromètre selon la revendication 1, dans lequel les première et deuxième électrodes mobiles (2, 40) sont constituées chacune par une masse mobile centrale (6) à partir de laquelle s'étend latéralement une pluralité de doigts mobiles (7), et les première et deuxième électrodes fixes (4, 42) sont constituées chacune de deux parties disposées symétriquement de part et d'autre desdites masses mobiles centrales (6) et comportant chacune une pluralité de doigts fixes (8) s'étendant latéralement vers lesdites masses centrales (6) de sorte que chaque doigt mobile (7) soit disposé entre deux doigts fixes contigus (8A, 8B).

3. Accéléromètre selon la revendication 2, dans lequel les doigts mobiles (7) (respectivement fixes (8A, 8B)) des première et deuxième électrodes mobiles (2, 40) (respectivement fixes (4, 42)) sont solidaires.

4. Accéléromètre selon la revendication 2, dans lequel les doigts mobiles (7) (respectivement fixes (8A, 8B)) des première et deuxième électrodes mobiles (2, 40) (respectivement fixes (4, 42)) sont dissociés.

5. Accéléromètre selon la revendication 4, dans lequel les doigts mobiles (7) (respectivement fixes (8A, 8B)) des première et deuxième électrodes mobiles (2, 40) (respectivement fixes (4, 42)) sont alignés verticalement.

6. Accéléromètre selon la revendication 4, dans lequel les doigts mobiles (7) (respectivement fixes (8A, 8B)) des première et deuxième électrodes mobiles (2, 40) (respectivement fixes (4, 42)) sont décalés verticalement les uns par rapport aux autres.

7. Accéléromètre selon la revendication 4, dans lequel les éléments constitutifs (7), (8), (6) de la première microstructure à peignes interdigités (20) sont tournées d'un angle de 90° par rapport aux éléments constitutifs (7), (8), (6) de la deuxième microstructure à peignes interdigités (22).

8. Accéléromètre selon l'une quelconque des revendications précédentes, dans lequel les masses mobiles respectives (6) desdites première et deuxième électrodes mobiles (2, 40) sont solidaires.

9. Accéléromètre selon l'une quelconque des revendications 1 à 7, dans lequel les masses mobiles (6) respectives desdites première et deuxième électrodes mobiles (2, 40) sont dissociées.

10. Accéléromètre selon l'une quelconque des revendications 1 à 9, dans lequel lesdites première et deuxième électrodes mobiles (2, 40) sont reliées à leurs extrémités respectives au substrat par des tiges flexibles (12).

11. Accéléromètre selon la revendication précédente, dans lequel les tiges flexibles (12) de la première électrode mobile (2) sont solidaires des tiges flexibles (12) de la deuxième électrode mobile (40).

12. Accéléromètre selon la revendication 10, dans lequel les tiges flexibles (12) de la première électrode mobile (2) sont dissociés des tiges flexibles (12) de la deuxième électrode mobile (40).

13. Accéléromètre selon la revendication 10, dans lequel lesdites tiges flexibles (12) sont gravées directement dans le substrat (5).

14. Procédé de fabrication d'un accéléromètre à peignes capacitifs sur un premier substrat (5) comportant une couche sacrificielle enterrée (24) selon l'une quelconque des revendications précédentes, **caractérisé en ce qu'**il comporte les étapes suivantes :
- formation d'un masque sur le premier substrat (5) sur deux faces opposées dudit substrat, pour définir, de part et d'autre de ladite couche superficielle enterrée (24), respectivement une première microstructure à peignes interdigités (20) superposée à une deuxième microstructure à peignes interdigités (22),
- gravure sur une face du premier substrat de la première microstructure à peignes interdigités (20) comprenant des doigts fixes (8) et mobiles (7), une masse (6) et des bras de rappel (12), avec arrêt sur la couche sacrificielle enterrée (24),
- formation d'une cavité sur une face d'un deuxième substrat (26),
- scellement de la face du premier substrat (5) comprenant la première microstructure à peignes interdigités (20) sur la face du deuxième substrat (26) en vis-à-vis de la cavité du deuxième substrat,
- gravure sur la face exposée du premier substrat de la deuxième microstructure à peignes interdigités (22) comprenant des doigts fixes (8) et mobiles (7), une masse (6) et des bras de rappel (12), avec arrêt sur la couche sacrificielle enterrée (24),
- élimination d'au moins une partie de la couche sacrificielle enterrée (24).

15. Procédé de fabrication selon la revendication 14, dans lequel l'élimination de la couche sacrificielle enterrée (24) se fait au niveau où la couche sacrificielle enterrée est mise à nue par les étapes de gravure.

16. Procédé de fabrication selon la revendication 15, dans lequel l'élimination de la couche sacrificielle enterrée (24) se fait par gravure sèche.

17. Procédé de fabrication selon la revendication 14, dans lequel l'élimination de la couche sacrificielle enterrée (24) se fait également au niveau de la couche sacrificielle enterrée reliant les doigts de la première microstructure (20) et ceux de la deuxième microstructure (22).

18. Procédé de fabrication selon la revendication 17, dans lequel l'élimination de la couche sacrificielle enterrée (24) se fait également au niveau des masses (6).

19. Procédé de fabrication selon la revendication 18, dans lequel l'élimination de la couche sacrificielle enterrée (24) se fait par gravure à l'acide fluorhydrique HF à l'état liquide ou vapeur.

20. Procédé de fabrication selon la revendication 14, **caractérisé en ce qu'**il comprend en outre, entre l'étape de scellement et l'étape de gravure, une étape d'amincissement de la face exposée du substrat (5) avec arrêt avant d'atteindre la couche d'oxyde enterrée (24).

21. Procédé de fabrication selon la revendication 20, dans lequel l'étape d'amincissement se fait par gravure KOH.

22. Procédé de fabrication selon l'une quelconque des revendications 14 à 21, dans lequel le substrat (5) est un substrat de type SOI comportant une couche d'oxyde SiO₂ sacrificielle enterrée (24).
